# EUROPÄISCHE PATENTSCHRIFT

(11) **EP 2 190 790 B1**
(45) Veröffentlichungstag und Bekanntmachung des Hinweises auf die Patenterteilung: **21.06.2017**
(21) Anmeldenummer: 08801749.6
(22) Anmeldetag: 29.08.2008
(51) Int. Cl.: C02F 1/72, C02F 1/68

(54) **ERHÖHUNG DER BIOZIDEN WIRKUNG VON WASSERSTOFFPEROXID IN ABWÄSSERN DURCH ÜBERGANGSMETALLKATALYSATOREN**
INCREASE IN BIOCIDAL EFFECT OF HYDROGEN PEROXIDE IN WASTE WATERS BY TRANSITION METAL CATALYSTS
PROCÉDÉ VISANT À ACCROÎTRE L'EFFET BIOCIDE DE PEROXYDE D'HYDROGÈNE CONTENU DANS DES EAUX USÉES À L'AIDE DE CATALYSEURS À BASE DE MÉTAUX DE TRANSITION

(30) Priorität: 07.09.2007 DE 102007042615
(43) Veröffentlichungstag der Anmeldung: 02.06.2010
(73) Patentinhaber: Kurita Water Industries Ltd., Nakano-ku, Tokyo 164-0001 (JP)
(72) Erfinder: ARNOLD, Andreas, 40723 Hilden (DE); DÖRING, Steve, 40822 Mettmann (DE); HATER, Wolfgang, 41564 Kaarst (DE); ROSENKRANZ, Christian, 40231 Düsseldorf (DE); SCHWEINSBERG, Matthias, 40764 Langenfeld (DE); STUMPE, Stefan, 40589 Düsseldorf (DE); JANSSEN, Frank, 41470 Neuss (DE); GOMES, Paolo, 50737 Köln (DE)
(74) Vertreter: Reitstötter Kinzebach
(86) Internationale Anmeldenummer: PCT/EP2008/007069
(87) Internationale Veröffentlichungsnummer: WO 2009/033571

(56) Entgegenhaltungen:
- WO-A-02/088289
- WO-A-2005/118170

## Beschreibung

Die vorliegende Erfindung betrifft ein Verfahren zur Behandlung von mit Keimen bzw. Mikroorganismen belastetem Abwasser durch Wasserstoffperoxid in Gegenwart eines Katalysators, wobei der Katalysator eine organische Metallkomplex-Verbindung aus Kationen von Eisen, Zink, Kupfer, Kobalt, Vanadium oder Mangan und einem aus Stickstoff-haltigen aromatischen Heterozyklen bestehenden Komplexbildner mit einem tertiären Alkylamin-Grundgerüst darstellt. Das Verfahren umfasst ferner die Dosierung der erfindungsgemäßen Metallkomplex-Verbindung zum Abwasser zur Erhöhung der bioziden Wirkung von Wasserstoffperoxid und die Abtötung der Keime bzw. Mikroorganismen an mit der organischen Metallkomplex-Verbindung geträgertem Katalysatormaterial im Wasserstoffperoxid-haltigen Abwasser.

Niedermolekulare Oxidationsmittel auf Basis von Peroxoverbindungen, insbesondere Wasserstoffperoxid, gehören zu den am häufigsten verwendeten Verbindungen in der Wasserbehandlung. Auf Grund der hohen oxidativen Wirkung, die teilweise auf die Bildung radikalischer Zwischenstufen bei der Umwandlung der Peroxoverbindungen zurückgeführt wird, und ihrer leichten Bevorratung und Dosierbarkeit eignen sie sich hervorragend für die Zersetzung von organischen Verunreinigungen und für die Entkeimung in wässrigen Systemen. Der komplexe Reaktionsablauf der reduktiven Zersetzung der Peroxoverbindungen bedingt jedoch, dass der Abbau von organischen Verbindungen oder die Zerstörung von Keimen eine niedrige Kinetik also Umsetzungsrate aufweist. Die Erhöhung der Umsetzungsrate kann bereits durch die Gegenwart von

Übergangsmetallen deutlich erhöht werden. Die sogenannte Fentonsche Lösung stellt ein Gemisch von zweiwertigen Eisen-Ionen und Wasserstoffperoxid in saurer Lösung dar, bei der die reduktive Zersetzung von Wasserstoffperoxid in einer komplexen Reaktionsabfolge durch die Anwesenheit von Eisen(II)-Ionen katalysiert wird. Neben der Katalyse der reduktiven Zersetzung von Peroxoverbindungen in homogener Lösung ist auch die heterogene Katalyse zur Beschleunigung der Zersetzung von Peroxoverbindungen bekannt. So beschreibt die Offenlegungsschrift EP 1717206 ein Verfahren zur Entkeimung durch Zudosierung von Wasserstoffperoxid in Gegenwart von Vollmetallkatalysatoren. Die DE 19607390 lehrt unabhängig hierzu, dass derartige Vollmetallkalaysatoren bevorzugt Mangan oder Kupfer enthalten, um eine möglichst effektive Aktivierung des Oxidationsmittels Wasserstoffperoxid zu bewirken. Substanzen oder Hilfsstoffe, die die reduktive Umsetzung von Peroxoverbindungen, insbesondere von Wasserstoffperoxid, mit organischen Verbindungen katalysieren, werden im technischen Sprachgebrauch auch "Booster" genannt.

"Booster" für die Wasserstoffperoxid-Aktivität auf Basis von Übergangsmetallkomplexen, deren Liganden bevorzugt aus hydroxylierten Aromaten bestehen, sind in der US 2002/0034421 offenbart. Als Zentralatome dieser Komplexe werden Mangan, Kobalt, Nickel und bevorzugt Eisen verwendet, die in Form ihrer Salze mit den chelatisierenden Liganden umgesetzt werden. Eine Erhöhung der Aktivität des Wasserstoffperoxid wird dabei auch in pH neutralen wässrigen Systemen erreicht, so dass gemäß der Lehre der US 2002/0034421 der oxidative Abbau von organischen Verunreinigungen zusätzlich durch biotechnologische Verfahren unterstützt werden kann.

Die WO 2004/083516 hingegen beschreibt "Booster" für die Bleiche von Textilien mit Peroxoverbindungen, die Innerkomplexe von Übergangsmetall-Ionen darstellen. Als Liganden werden sogenannte Makrozyklen eingesetzt, die ringförmig geschlossen sind und ein 4-fach koordinierendes Ligandenfeld bestehend aus amidisch gebundenen Stickstoffatomen aufspannen.

Aus der Lehre der WO 2005/068074 sind Übergangsmetallkomplexe der Elemente Titan, Eisen, Kobalt, Nickel, Kupfer und vorzugsweise Mangan mit "Booster" Eigenschaften bekannt, deren Ligandenstruktur auf dem Grundgerüst von m-Terphenyl basiert, wobei mindestens ein Stickstoffatom pro aromatischem Kern heterosubstituiert vorliegt. Die Verwendung derartiger Übergangsmetallkomplexe für die Abwasserbehandlung in Gegenwart von Peroxoverbindungen wird erwähnt, allerdings beschränkt sich die detaillierte Beschreibung auf die Bereitstellung von wässrigen oxidierenden Lösungen für Bleichprozesse in der Papierindustrie.

Die Offenlegungsschrift EP 0733594 lehrt ein Verfahren zur Entfernung schädlicher Verunreinigungen aus Böden, Wassersystemen und der Gasphase mittels Peroxidverbindungen und Übergangsmetallkomplexen von alkalisch reagierenden Polyaminen mit Mangan, Kobalt und vorzugsweise Eisen. Die Zersetzung der organischen Verunreinigungen erfolgt dabei entweder in homogener Lösung, wobei einem wässrigen System der Katalysator und die Peroxoverbindung hinzugegeben werden, oder in heterogener Katalyse, wobei der Übergangsmetallkomplex auf einem Trägermaterial immobilisiert wird. Die Immobilisierung auf dem Trägermaterial kommt dabei durch chemische oder physikalische Bindungskräfte zustande, wobei als Trägermaterial bevorzugt Kunstharze verwendet werden.

Die Aufgabe der vorliegenden Erfindung besteht nun darin, ein im Vergleich zum Stand der Technik überlegenes Verfahren zur Erhöhung der bioziden bzw. keimtötenden Wirkung von Wasserstoffperoxid bei der Behandlung von Abwasser bereitzustellen, wobei Katalysatoren auf Basis von Metallkomplexverbindungen eingesetzt werden, die sich zudem für eine Trägerung an Festkörpermaterialien eignen.

Die biozide Wirkung wird im Sinne der vorliegenden Erfindung als die Abnahme der Keimzahl eines spezifischen Mikroorganismus in einem vorgegebenen Volumen und in einem bestimmten Zeitraum definiert.

Im Sinne der vorliegenden Erfindung ist der Begriff Abwasser gemäß der DIN 4045: 2003-08 zur Abwassertechnik technisch definiert und bezeichnet das nach häuslichem, gewerblichem oder industriellem Gebrauch veränderte, insbesondere verunreinigte, abfließende, auch von Niederschlägen stammende und in die Kanalisation gelangende Wasser. Hierzu gehören insbesondere auch aus industriellen Prozessen stammende Abwasser wie Kühl- und Prozesswasser, aber auch Wassermengen, die in einer Prozesskette zur Trink- und Brauchwasserversorgung aufbereitet werden.

Eine Trägerung des Katalysators gemäß der vorliegenden Erfindung liegt sowohl dann vor, wenn der Katalysator oder der organische Komplexbildner des Katalysators über kovalente Bindungen fest an ein Festkörpersubstrat gebunden ist, als auch, wenn ionische Wechselwirkungen mit der Festkörperoberfläche oder die Physisorption eine Anreicherung des Katalysators oder des organischen Komplexbildners bewirken, so dass die Abgabe von Metallkomplexverbindungen oder organischen Komplexbildnern in die wässrige Phase entweder vollständig oder zumindest teilweise unterbunden wird.
Die der Erfindung zugrunde liegende Aufgabe wird gelöst durch ein Verfahren zur keimtötenden Behandlung von mit Mikroorganismen belastetem Abwasser, wobei dem Abwasser eine Menge an Wasserstoffperoxid und ein Katalysator hinzudosiert oder das Wasserstoffperoxid-haltige Abwasser mit einem Katalysator in Kontakt gebracht wird, dadurch gekennzeichnet, dass der Katalysator eine Metallkomplex-Verbindung darstellt bestehend aus
a) einem Metall-Kation von Eisen, Zink, Kupfer, Kobalt, Vanadium oder Mangan und
b) organischen Komplex-Liganden der allgemeinen Formel (I): 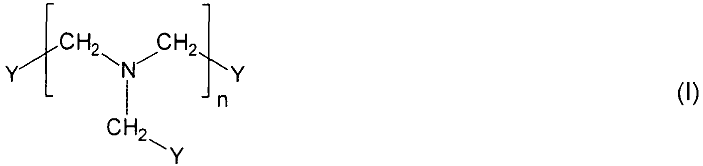
   -- wobei die Reste Y unabhängig voneinander ausgewählt sind aus aromatischen Heterozyklen mit mindestens einem Stickstoff-Heteroatom;
   -- wobei die Anzahl n mindestens 1 und höchstens 5 ist.

Offensichtlich bilden die aromatischen Stickstoffheterozyklen zusammen mit den tertiären Stickstoffatomen im aliphatischen Grundgerüst ein Ligandenfeld für die Komplexierung der Metall-Kationen a) derart, dass am metallischen Zentralatom besonders wirksame Koordinationsstellen für die Wechselwirkung mit dem Peroxid entstehen.

Die Reste Y also die aromatischen Stickstoffheterozyklen des erfindungsgemäßen Komplex-Liganden gemäß der allgemeinen Strukturformel (I) sind bevorzugt ausgewählt aus Pyridin-2-yl, Pyrazin-2-yl, Pyrimidin-2-yl, Pyridazin-3-yl, Imidazol-2-yl, Pyrazol-3-yl, Purin-2-yl, Purin-6-yl, Purin-8-yl, Chinolin-2-yl, Isochinolin-1-yl, Isochinolin-3-yl, Phtalazin-1-yl, Chinoxalin-2-yl, Chinazolin-2-yl, Cinnolin-3-yl, Pteridin-2-yl, Pteridin-6-yl und/oder Pteridin-7-yl.

Für die heterogene Katalyse, bei der der erfindungsgemäße Katalysator geträgert und demzufolge an eine Festkörpermatrix gebunden werden muss, sind die heterozyklischen Reste der Komplex-Liganden für eine entsprechende Funktionalisierung besonders gut geeignet, da einerseits die Reaktivität der Stickstoffheteroatome und andererseits die Aromatizität der Heterozyklen die Einführung einer Vielzahl funktioneller Gruppen erlaubt. Die Präferenz für bestimmte Derivatisierungen und Reaktionswege kann dabei je nach Heterozyklus unterschiedlich sein und speziell auch von der Anzahl der Heteroatome im aromatischen System abhängen. Während die Imidazol- und Pyrazol-Derivate elektrophil am aromatischen Kern substituiert und beispielsweise nitriert, sulfoniert und zumindest das Pyrazol-Derivat auch acetyliert (Friedels-Craft-Reaktion) werden können, sind aromatische Kernsubstitutionen an Pyridin-Derivaten besonders leicht nukleophil durchführbar, und beispielsweise aminierte oder alkylierte Pyridin-Derivate zugänglich. Zusätzlich können Imidazol- und Pyrazol-Derivate wegen ihrer hohen Basizität nucleophile Substitutionen und Additionen am Stickstoffheteroatom eingehen.

Gemäß der vorliegenden Erfindung sind für eine Trägerung des Katalysators solche Reste Y des Komplex-Liganden der allgemeinen Formel (I) bevorzugt, die als kernsubstituierte Heterozyklen vorliegen, wobei die Substituenten ausgewählt sind aus Alkyl-, Alkylcarbonsäure-, Alkylsulfonsäure-, Alkylphosphonsäure-, Alkylammonium-, Thioalkyl-, Hydroxyalkyl-, Aminoalkyl-, Carbonsäure-, Phosphonsäure-, Sulfonsäure-, und/oder primäre Amino-Gruppen, deren aliphatische Hauptketten, insofern vorhanden, aus nicht mehr als 6 Kohlenstoffatomen bestehen. Die Reste Y können dabei als einfach oder mehrfach-substituierte aromatische Heterozyklen vorliegen.

Als besonders effektiv für die Erhöhung der bioziden Wirkung in Gegenwart von Wasserstoffperoxid haben sich "Booster" herausgestellt, deren Komplex-Liganden folgender allgemeinen chemischen Strukturformel (II) entsprechen:

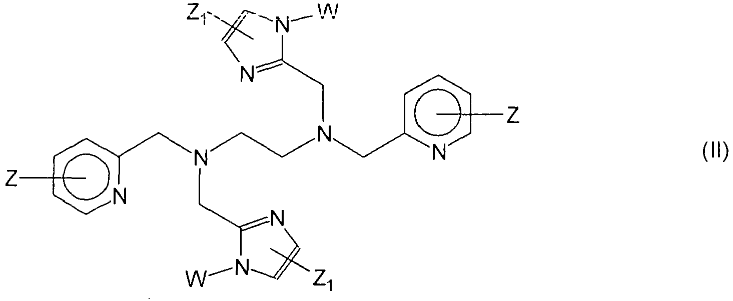

Die an den aromatischen heterozyklischen Kernen substituierten Reste Z und Z₁ entsprechen der zuvor genannten Auswahl an Substituenten, wobei die Reste Z unabhängig voneinander ausgewählt sein können und zusätzlich auch Wasserstoffatome, Phenyl-Gruppen und Alkenyl- oder Formyl-Gruppen mit nicht mehr als 3 Kohlenstoffatomen in der Hauptkette aufweisen können. Die Reste Z₁ im Imidazol-homologen Ring befinden sich in 4- und/oder 5-Stellung. Die Reste W sind unabhängig voneinander ausgewählt aus Wasserstoffatomen, Alkyl-Gruppen und Hydroxyalkyl-Gruppen mit nicht mehr als 6 Kohlenstoffatomen in der Hauptkette und Phenyl-Gruppen. Grundsätzlich soll gelten, dass der Bezeichnung Phenyl-Gruppe sinngemäß auch ein- oder mehrfach-substituierte Phenyl-Reste angehören.

Für Liganden gemäß der allgemeinen Strukturformel (II) sind bei der Anwendung des erfindungsgemäßen Verfahrens bevorzugt Eisen(III)-Ionen und Mn(II)-Ionen einzusetzen. Insbesondere Eisen(III)-Komplexe dieser Liganden erhöhen die biozide Wirkung signifikant und besitzen eine zufrieden stellende pH-Stabilität, d.h. bei pH-Werten unterhalb von pH 9 erfolgt in einer homogenen wässrigen Lösung des Eisen(III)-Komplexes keine sichtbare Ausfällung von Eisenhydroxid.

Bei Anwendung des erfindungsgemäßen Verfahrens in homogener wässriger Lösung sind Liganden gemäß der allgemeinen Strukturformel (II) bevorzugt, die weitgehend dem Komplexgrundgerüst entsprechen, also solche Liganden, in denen die Reste Z und Z₁ Wasserstoffatome sind und der Rest W eine Methyl-Gruppe darstellt.

Grundsätzlich ist es vorteilhaft, dass das molare Verhältnis von erfindungsgemäß relevanten Metall-Kationen zum erfindungsgemäßen organischen Komplex-Liganden in homogener wässriger Lösung 2:1 nicht überschreitet, aber mindestens 1:2, vorzugsweise mindestens 2:3 und insbesondere 1:1 ist.
Die höchste katalytische Aktivität bezogen auf 1 ppm des Metall-Kations des Metall-Komplexes liegt vornehmlich dann vor, wenn die Metall-Kationen in einem 1:1 Komplex an den erfindungsgemäßen Liganden gebunden sind. Allerdings gilt für Liganden gemäß der allgemeinen Strukturformel (I), die 2n+2 mögliche Koordinationsstellen bieten, mit n ≥ 3, dass ein molares Verhältnis von 2:1 bevorzugt wird.
Es kann jedoch sinnvoll sein, einen Überschuss an Ligand vorzugeben, insbesondere dann, wenn im technischen Gebrauch, anlagenbedingt oder verfahrenstechnisch vorgegeben ein gewisser Anteil an Metall-Ionen im Abwasser gelöst vorliegt, der mit den erfindungsgemäßen komplex gebundenen Metall-Kationen um die Liganden konkurriert. Dies gilt auch für verfahrensbedingt eingebrachte Eisen(III)-Ionen, die durch einen Überschuss des freien Liganden zusätzlich komplexiert und damit zur Erhöhung der bioziden Wirkung beitragen können. Umgekehrt sind stöchiometrische Überschüsse an Metall-Ionen, insbesondere an Eisen(III)-Ionen, im technischen Prozess je nach Verfahrensführung und Anlage nicht vermeidbar. Dementsprechend ist das hier angegebene molare Verhältnis als Kontrollparameter der für die "Booster"-Wirkung verantwortlichen Einzelparameter in der Zusammensetzung des gemäß der Erfindung behandelten Abwassers anzusehen. Diese Einzelparameter sind zum einen die Gesamtkonzentration der erfindungsgemäß relevanten Metall-Kationen und zum anderen die Konzentration des erfindungsgemäßen Liganden im Abwasser. Eine Nachdosierung des Liganden oder des Metallkomplexes kann also dann erforderlich werden, wenn das molare Verhältnis von erfindungsgemäß relevanten Metall-Kationen zum erfindungsgemäßen organischen Komplex-Liganden deutlich oberhalb des molaren Verhältnisses von 2:1 liegt und der "Booster"-Faktor, definiert als das Verhältnis der erhöhten bioziden Wirkung gemessen als Abnahme der Keimzahl in einem definierten Volumen in einem definierten Zeitintervall zur bioziden Wirkung in der Metallkomplexfreien lediglich das Peroxid enthaltenden Wasserphase, unter einen für den jeweils verwendeten Metallkomplex spezifischen kritischen Wert fällt, aber spätestens dann, wenn der "Booster"-Faktor gleich 1 ist.
Ebenso kann der erfindungsgemäße, katalytisch aktive Metallkomplex dadurch degradieren, dass der organische Ligand im Peroxid-haltigen Abwasser partiell oxidativ abgebaut wird. Auch in diesem Fall kann auf Grundlage des "Booster"-Faktors und anhand einer Analyse des molaren Verhältnisses von Metall-Kationen zu Liganden im Abwasser entschieden werden, ob eine Nachdosierung des Liganden oder der Metallkomplex-Verbindung erforderlich ist.

Alternativ erfolgt die Dosierung des Metallkomplexes in einem erfindungsgemäßen Verfahren bevorzugt derart, dass der auf das Metall bezogene Gewichtsanteil der Metallkomplex-Verbindung im zu behandelnden Abwasser mindestens 0,1 ppm, besonders bevorzugt mindestens 1 ppm beträgt und 1000 ppm, besonders bevorzugt 100 ppm nicht überschreitet. Vor einer Dosierung ist folglich der Anteil der katalytisch aktiven komplex gebundenen Metall-Kationen im Abwasser zu ermitteln. Dieser Anteil kann beispielsweise mittels standardisierter spektroskopischer Verfahren (UV-vis Spektroskopie) bestimmt werden.

Die katalytisch aktive Metallkomplex-Verbindung gemäß der vorliegenden Erfindung wird hergestellt durch Umsetzen von Metallsalzen der jeweiligen erfindungsgemäßen Metall-Kationen ausgewählt aus Kationen von Eisen, Zink, Kupfer, Kobalt, Vanadium oder Mangan mit dem erfindungsgemäßen Liganden gemäß der allgemeinen Strukturformel (I), wobei das molare Verhältniss von Metall-Kationen zu Liganden vorzugsweise 2:1 nicht überschreitet, aber vorzugsweise mindestens 1:2, und insbesondere 1:1 ist. Die Umsetzung erfolgt in homogener wässriger Lösung und die Gewinnung und Reinigung der Metallkomplex-Verbindung durch Ausfällung und Umkristallisation in einem geeigneten Lösemittel. Eine stöchiometrische Umsetzung bezeichnet dabei, die Umsetzung in einem molaren Verhältnis von Metall-Kationen zu erfindungsgemäßen Liganden gemäß der allgemeinen Strukturformel (I) von 1:1 für n < 3 und 2:1 für n ≥ 3. Verdünnte wässrige Lösungen der Metallkomplex-Verbindung enthaltend einen Überschuss an Wasserstoffperoxid können sodann beispielsweise UV-spektroskopisch vermessen und die Absorption bei einer vorgegebenen Wellenlänge oder in einem vorgegebenen Wellenlängenbereich als Standard für die Bestimmung der Konzentration der komplex gebundenen Metall-Kationen und/oder der Liganden-Konzentration im Abwasser verwendet werden. Vorzugsweise sind hier Absorptionsbereiche auszuwählen, die einerseits Charge-Transfer-Übergänge markieren also spezifisch für den jeweiligen Metallkomplex sind, und andererseits solche, die lediglich das Ligandensystem betreffen, beispielsweise elektronische π-π* Übergänge der aromatischen heterozyklischen Reste Y gemäß der allgemeinen Strukturformel (I).

Die katalytisch aktive Metallkomplex-Verbindung wird entweder als wässrige Suspension oder als homogene Lösung der Metallkomplex-Verbindung mit einem Gewichtsanteil bezogen auf das Metall von nicht weniger als 0,1 %, bevorzugt nicht weniger als 1 % und besonders bevorzugt von nicht weniger als 5 % hinzudosiert. Alternativ kann die Metallkomplex-Verbindung im erfindungsgemäßen Verfahren auch unmittelbar als Feststoff in das Abwasser gegeben werden. Der Feststoff stellt dabei das aufgereinigte oder unmittelbar anfallende, und vorzugsweise nahezu stöchiometrische Umsetzungsprodukt des organischen Liganden mit einem entsprechenden Salz der erfindungsgemäß relevanten Metall-Kationen dar.

Die Dosierung von Wasserstoffperoxid dem eigentlichen Oxidans ist abhängig von der Keimbelastung des Abwassers selbst und grundsätzlich ständig der Art und Menge der Mikroorganismen anzupassen. Üblicherweise wird so verfahren, dass der Gewichtsanteil im zu behandelnden Abwasser bevorzugt mindestens 0,001 g/l, besonders bevorzugt mindestens 0,01 g/l beträgt und bevorzugt 100 g/l, besonders bevorzugt 10 g/l nicht überschreitet.

Im erfindungsgemäßen Verfahren erfolgt die Dosierung von Wasserstoffperoxid bevorzugt unabhängig von der Dosierung der Metallkomplex-Verbindung aus voneinander getrennten Bevorratungs- und Dosiereinheiten in das zu behandelnde Abwasser. Das Wasserstoffperoxid wird dabei bevorzugt als wässrige Lösung mit einem Gewichtsanteil an Wasserstoffperoxid von höchstens 80 %, besonders bevorzugt höchstens 60 % zudosiert.

In einem ersten Aspekt der vorliegenden Erfindung besteht das Verfahren zur Erhöhung der bioziden Wirkung im Abwasser zudem darin, dass die zuvor beschriebene Metallkomplex-Verbindung in geträgerter Form eingesetzt werden kann, wobei das zu behandelnde Abwasser das Trägermaterial, an dessen Oberfläche die Metallkomplex-Verbindung gebunden ist, für einen vorgegebenen Zeitraum oder dauerhaft umströmt.

Als Trägermaterialien können im Wesentlichen sämtliche im zu behandelnden Abwasser inerte und unlösliche Materialien verwendet werden, die in einer Form einsetzbar sind, so dass eine möglichst große innere Oberfläche resultiert, die von der wässrigen Phase benetzt wird. Zu Materialien mit hoher innerer Oberfläche, die so genannte Durchflussporen aufweisen, gehören insbesondere gesinterte oder thermisch unbehandelte keramische Pulvermaterialien sowie organische Harze, die bevorzugt über eine Emulsionspolymerisation zugänglich sind.

Keramische oder anorganische Pulvermaterialien wie Zirkoniumoxid, Aluminiumoxid, Siliziumdioxid und Silikate, wie Montmorillonit, Zeolithe oder Aluminiumsilikate eignen sich besonders für eine ionische Trägerung und die Physisorption der erfindungsgemäßen Metall-Komplexe. Hierzu sollten die organischen heterozyklischen Reste Y der Liganden gemäß der allgemeinen Strukturformel (I) oder die organischen Reste Z und Z₁ der allgemeinen Strukturformel (II) des bevorzugten Komplex-Liganden möglichst ionische Gruppen enthalten. Für die Trägerung an Aluminiumoxid, Siliziumdioxid und an Silikate sind Alkylphosphonsäure-Gruppen, die an den aromatischen heterozyklischen Gruppen Y substituiert sind, wegen ihrer hohen Adsorptionsenergie auf oxidischen Oberflächen besonders prädestiniert.

Die Trägerung der Metall-Komplexe an organische Harze ist bevorzugt entweder durch ionische Kopplung an ein ionogenes Harz oder durch eine chemische Kopplung zur polymeren Matrix des Harzes durchzuführen.
Ionogene Harze sind im Speziellen Ionenaustauscherharze, deren Matrix durch Kondensation (z.B. Phenol-Formaldehyd) oder durch Polymerisation (z.B. Copolymere aus Styrol und Divinylbenzol sowie Methacrylaten und Divinylbenzol) erhalten wird und die mit Sulfonsäure-, Carbonsäure-, Phosphonsäure-Gruppen oder quartären AmmoniumGruppen funktionalisiert vorliegen. Eine effektive Trägerung der erfindungsgemäßen Metall-Komplexe an derartige ionogene Harze gelingt, wenn die heterozyklischen Reste Y der Liganden gemäß der allgemeinen Strukturformel (I) mit ionischen Gruppen funktionalisiert werden, die eine dem ionogenen Harz entgegengesetzte Ladung aufweisen.
Eine chemische Kopplung der erfindungsgemäßen Metall-Komplexe an ein organisches Trägermaterial kann beispielsweise an nicht vollständig vernetzten Epoxidharzen mit endständigen Epoxid-Gruppen oder Polyurethan-Harzen mit endständigen freien oder blockierten Isocyanat-Gruppen durch Kondensationsreaktionen mit entsprechend der vorliegenden Erfindung derivatisierten heterozyklischen Resten Y der Liganden gemäß der allgemeinen Strukturformel (I) vorgenommen werden. Insbesondere eignen sich hierzu Amino-, Aminoalkyl- und Hydroxyalkyl-Gruppen, die im heterozyklischen Rest Y des Liganden eingeführt werden können. Aber auch im Falle von Liganden, deren Reste Y Pyridin-Einheiten enthalten, wie beispielsweise die bevorzugte Ausführungsform gemäß allgemeiner Strukturformel (II), kann über eine Methyl-Gruppe mit hoher C-H Acidität in 4- oder 6-Stellung zum Heteroatom der Pyridin-Einheit die Kondensation mit derartigen Harzen durchgeführt werden.
Für die Trägerung kann prinzipiell die derivatisierte Metallkomplex-Verbindung unmittelbar mit dem Trägermaterial umgesetzt werden, so dass in einem einzigen Schritt ein einsatzfähiges, katalytisch aktives Material vorliegt. Alternativ kann aber auch der derivatisierte Ligand gemäß einer der allgemeinen Strukturformeln (I) oder (II) zunächst mit dem geeigneten Trägermaterial umgesetzt werden, worauf in einem zweiten Schritt das derart modifizierte Trägermaterial mit einer Metallsalz-Lösung der erfindungsgemäßen Metall-Kationen beschickt und somit durch Komplexierung der Metall-Kationen beladen und aktiviert wird. Letzteres Verfahren ist insbesondere dann bevorzugt, wenn eine chemische Kopplung also eine kovalente Trägerbindung der erfindungsgemäßen Metall-Komplexe an ein organisches Harz erfolgen soll.

Grundsätzlich gilt auch für die Trägerung der Metall-Komplexe, dass diese eine Gleichgewichtsreaktion darstellt und damit reversibel ist. Bei der chemischen Kopplung der Metall-Komplexe an ein organisches Material, die unter Knüpfung neuer chemischer Bindungen vollzogen wird, liegt das chemische Gleichgewicht sehr weit zugunsten der geträgerten Metall-Komplex Spezies. Allerdings sind die Wechselwirkungsenergien bei der Physisorption und/oder der elektrostatischen Anbindung ionogener Metall-Komplexe deutlich geringer ebenso wie die kinetischen Energiebarrieren für den Übergang von geträgerter Spezies zu in homogener Phase gelöster Metall-Komplex Spezies. Die Folge dieser Gleichgewichtseinstellung ist, dass bei einem dauerhaft von der wässrigen Phase umströmten Trägermaterial, welches mit den erfindungsgemäßen Metall-Komplex belegt ist, ein kontinuierliches "Ausbluten" der katalytisch aktiven Metall-Komplexe in das Abwassersystem erfolgt. Einerseits ist dieses "Ausbluten" des Trägermaterials unerwünscht, da dies einen regelmäßigen Austausch des gesamten Trägermaterials oder zumindest eine Regeneration desselben notwendig macht, andererseits kann die Verfahrensweise derart angepasst werden, dass solche Trägermaterialien, an denen der Metall-Komplex vorzugsweise lediglich über Physisorption und/oder elektrostatische Wechselwirkungskräfte gebunden vorliegt, als kontrolliertes "Release"-System für den katalytisch aktiven Metall-Komplex eingesetzt werden.

Daher betrifft die vorliegende Erfindung in einem weiteren Aspekt ein Verfahren, bei dem das zu behandelnde Abwasser das Trägermaterial, an dessen Oberfläche die Metallkomplex-Verbindung gebunden ist, solange umströmt, bis der auf das Metall bezogene Gewichtsanteil der Metallkomplex-Verbindung im zu behandelnden Abwasser mindestens 0,1 ppm, bevorzugt mindestens 1 ppm beträgt und 1000 ppm, bevorzugt 100 ppm nicht überschreitet.
In dieser Verfahrensweise findet der katalytische Abbau der Keime bzw. Mikroorganismen vornehmlich homogenen in der wässrigen Phase statt. Nach vorgegebener Reaktionszeit kann unbeladenes Trägermaterial sodann mit dem von Keimen bzw. Mikroorganismen weitgehend befreiten, aber den aktiven Metall-Komplex enthaltenden Abwasser beschickt werden. Auf diese Weise können die gelösten Metall-Komplexe zumindest partiell aus dem Abwasser entfernt werden. Ein solches Verfahren zur Entfernung des MetallKomplexes aus dem Abwasser ist selbstverständlich unabhängig von der Art wie der Katalysator in das Abwasser gelangt ist und insofern auch für Verfahrensweisen geeignet, in denen der Metall-Komplex zuvor unmittelbar in das Abwassersystem dosiert wurde. Da der Katalysator also der Übergangsmetallkomplex für das Abwasser selbst eine unerwünschte Verunreinigung darstellt, und dies insbesondere dann, wenn das zu behandelnde Wasser nicht in geschlossenen Kreisläufen geführt wird, kann eine Abtrennung des Katalysators über Trägermaterialien mit hoher Affinität und Selektivität wie zuvor beschrieben notwendig sein. Alternativ kann der homogen gelöste Metall-Komplex auch mittels UV-Bestrahlung beispielsweise in einem Säulenreaktor zerstört und die freigesetzten, erfindungsgemäß relevanten Metall-Ionen falls notwendig über einen Ionenaustauscher abgetrennt werden.

Die zuvor beschriebenen mit dem erfindungsgemäßen Katalysator beladenen Trägermaterialien können in klassischen Fließbettreaktoren oder Festbettreaktoren betrieben werden. Die Trägersysteme können dabei mit dem Trägermaterial entweder wie für eine chromatographische Trennung oder bei einem Ionenaustauschersystem dicht gepackt werden oder das partikuläre Trägermaterial wird in diesem durch eine aufwärtsgerichtete Flüssigkeitsströmung in der Schwebe gehalten.

### Ausführungsbeispiele:

Als bevorzugter erfindungsgemäßer Katalysator für den Nachweis eines "Booster"-Effektes auf die biozide Wirkung von Wasserstoffperoxid wurde ein spezieller Ligand der allgemeinen Strukturformel (II) mit Eisen(III) als Zentralatom eingesetzt (Tab.1).

| Tab.1 Besipiel einer erfindungsgemäßen Metallkomplex-Verbindung ML | | |
|---|---|---|
| ML / Metallkomplex | M / Metall-Kation* | L / Ligand |
| ML | Fe(III) | 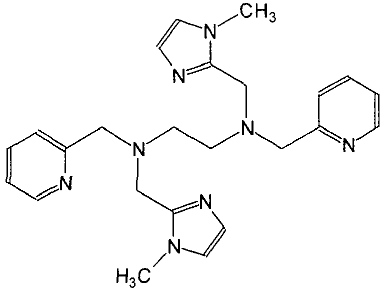 |
| * bei der Umsetzung mit dem Liganden eingesetzt als Metallsalzverbindung (Fe(III): FeCl₃) | | |

Der Einfluss des erfindungsgemäßen Katalysators ML auf die antimikrobielle Wirksamkeit von Wasserstoffperoxid wurde durch quantitative Suspensionstests (in Anlehnung an die DGHM-Vorschrift) untersucht, in denen die jeweiligen Keim-Abtötungsraten je Zeitintervall bestimmt werden. Als Testkeim wird der Gram-negative Wasserkeim Pseudomonas fluorescens ATCC 17397 [ATCC: American Type Culture Collection] verwendet. Der einzusetzende bakterielle Testkeim wird gemäß seiner spezifischen Wachstumsansprüche unter definierten Kulturbedingungen unter Verwendung von Caso-Medium angezüchtet. Pseudomonas fluorescens wird 24 h als Übernachtkultur auf Caso-Agar-Platten bei 37°C angezüchtet (1.Passage), davon wird eine Kolonie in 50ml Caso-Bouillon überführt und wiederum 24 h bei 37°C inkubiert (2.Passage). Die gesamten gewachsenen Zellen werden abzentrifugiert (3000 rpm; 20 min) und zweimal mit 50 ml DGHM-Wasser gewaschen. Nach dem Waschen werden die Zellen so in DGHM-Wasser aufgenommen, so dass der Versuchsansatz eine Ausgangskeimzahl Zellzahl von 10⁹ Zellen pro mi Lösung besitzt.

Der erfindungsgemäße Katalysator wird in bestimmten Konzentrationen (B1, B2) zusammen mit Wasserstoffperoxid aus frisch hergestellten Stammlösungen und Testkeim in DGHM-Wasser angesetzt. Die 20 ml großen Ansätze werden bei 30°C und 150 rpm geschüttelt und zu definierten Zeiten werden Proben entnommen, von denen zur Wachstumskontrolle jeweils 100 µl auf TLH-Std I-Agar ausplattiert werden.
Als Kontrollen dienten Ansätze nur mit Wasserstoffperoxid (Positivkontrolle; V1) und Ansätze, die nur Katalysator in bestimmten Anwendungskonzentrationen enthielten (Negativkontrolle; V2 und V3).

| Tab. 2 | | |
|---|---|---|
| Vergleichsversuche und beispielhafte erfindungsgemäße Zusammensetzungen in einer 10⁹ Keime pro ml enthaltenden wässrigen Lösung angesetzt mit DGHM-Wasser | | |
| Zusammensetzung | H₂O₂/ppm | ML / ppm |
| V1 | 600 | - |
| V2 | - | 10 |
| V3 | - | 250 |
| V4 | - | - |
| B1 | 600 | 10 |
| B2 | 600 | 250 |
| DGHM: Deutsche Gesellschaft für Hygiene und Mikrobiologie | | |

Es zeigt sich (Abb.1), dass bei 250 ppm Katalysator schon überraschenderweise nach 10 Minuten (0 h) die Keimzahl um ca. 6 Dekaden, dies entspricht in etwa 99,9999 % des ursprünglichen Keimgehaltes von Pseudomonas fluorescens, reduziert wird (B2), während sowohl die Positivkontrolle (nur H₂O₂: V1) als auch die Negativkontrollen (nur Katalysator: V2, V3) keinerlei Unterschiede zur Wasser-Kontrolle (V4) aufweisen. Dieser Katalysator-Effekt verstärkt sich mit zunehmender Zeitdauer des Experimentes. Nach 24 Stunden Expositionsdauer ist ebenfalls beim 10 ppm-Katalysator-Ansatz (B1) ein signifikanter Unterschied (>3 Dekaden) in der Keimzahl im Vergleich zur Positivkontrolle (V1) festzustellen. Die Ansätze V2 und V3, die nur Katalysator enthalten, entsprechen vom Keimgehalt in etwa demjenigen der Wasserkontrolle, d.h. der biozide Effekt wird nicht durch die bloße Anwesenheit des Katalysators ML hervorgerufen.

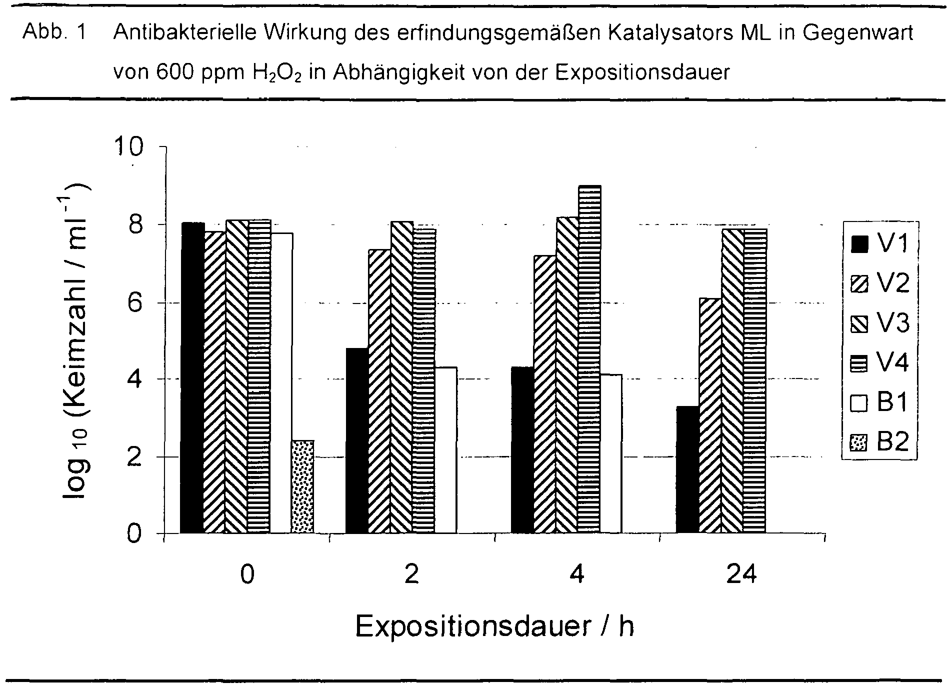

Die Wirkung des Katalysators ist am deutlichsten nach 24 Stunden zu beobachten (Tab. 3). Aus diesem Grund können nach 24 Stunden durch Variationen der Katalysator- bzw. Wasserstoffperoxid-Konzentrationen die optimalen Kombinationen ermittelt werden, d.h. die unteren und oberen wirksamen Konzentrations-Grenzen des Katalysators ML in Abhängigkeit von der vorliegenden Wasserstoffperoxid-Konzentration. Allgemein kann eine konzentrationsabhängige Wirksamkeit (Katalysator und H₂O₂) gegen den Testkeim gezeigt werden. Dieses zeigt sich daran, dass bei 600 ppm H₂O₂ schon 10 ppm Katalysator wirken, während die unterste wirksame Konzentration bei 300 ppm H₂O₂ 25 ppm Katalysator beträgt bzw. 100 ppm bei 100 ppm H₂O₂. Bei Wasserstoffperoxid-Konzentrationen >300 ppm zeigt die Katalysator-Wirkung eine Sättigung ab 100 ppm des Katalysators. Nach 24 Stunden war kein Wasserstoffperoxid in allen Ansätzen nachweisbar (geprüft mit Peroxid-Stäbchen, Merck), so dass auch keine weiteren antimikrobiellen Wirkungen erwarten sind.

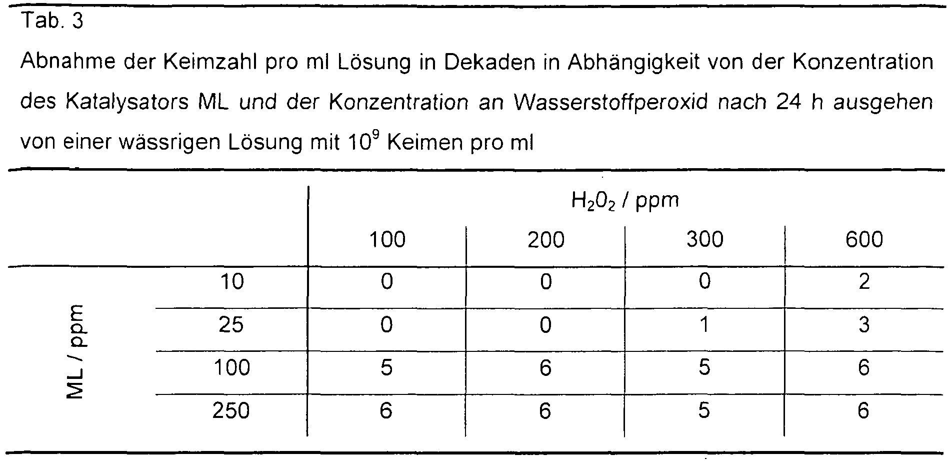

## Patentansprüche

1. Verfahren zur keimtötenden Behandlung von Abwasser, wobei dem Abwasser eine Menge an Wasserstoffperoxid und ein Katalysator hinzudosiert oder das Wasserstoffperoxid-haltige Abwasser mit einem Katalysator in Kontakt gebracht wird, **dadurch gekennzeichnet, dass** der Katalysator eine Metallkomplex-Verbindung darstellt bestehend aus
a) einem Metall-Kation von Eisen, Zink, Kupfer, Kobalt, Vanadium oder Mangan und
b) organischen Komplex-Liganden der allgemeinen Formel (I): 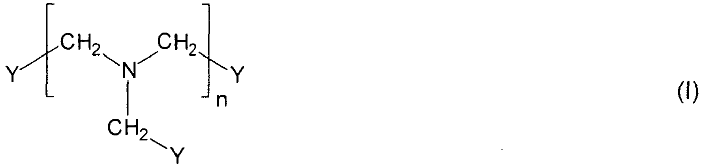
-- wobei die Reste Y unabhängig voneinander ausgewählt sind aus aromatischen Heterozyklen mit mindestens einem Stickstoff-Heteroatom;
-- wobei die Anzahl n mindestens 1 und höchstens 5 ist.

2. Verfahren gemäß Anspruch 1, **dadurch gekennzeichnet, dass** die Reste Y des Komplex-Liganden der allgemeinen Formel (I) ausgewählt sind aus Pyridin-2-yl, Pyrazin-2-yl, Pyrimidin-2-yl, Pyridazin-3-yl, Imidazol-2-yl, Pyrazol-3-yl, Purin-2-yl, Purin-6-yl, Purin-8-yl, Chinolin-2-yl, Isochinolin-1-yl, Isochinolin-3-yl, Phtalazin-1-yl, Chinoxalin-2-yl, Chinazolin-2-yl, Cinnolin-3-yl, Pteridin-2-yl, Pteridin-6-yl und/oder Pteridin-7-yl.

3. Verfahren gemäß einem oder beiden der vorherigen Ansprüche, **dadurch gekennzeichnet, dass** die Reste Y des Komplex-Liganden der allgemeinen Formel (I) als kernsubstituierte Heterozyklen vorliegen, wobei die Substituenten ausgewählt sind aus Alkyl-, Alkylcarbonsäure-, Alkylsulfonsäure-, Alkylphosphonsäure-, Alkylammonium-, Thioalkyl-, Hydroxyalkyl-, Aminoalkyl-, Carbonsäure-, Phosphonsäure-, Sulfonsäure-, und/oder primäre Amino-Gruppen wenn vorhanden mit einer aliphatischen Hauptkette von nicht mehr als 6 Kohlenstoffatomen.

4. Verfahren gemäß einem oder mehreren der vorherigen Ansprüche 1 bis 3, **dadurch gekennzeichnet, dass** der Komplex-Ligand folgender chemischer Strukturformel (II) entspricht: 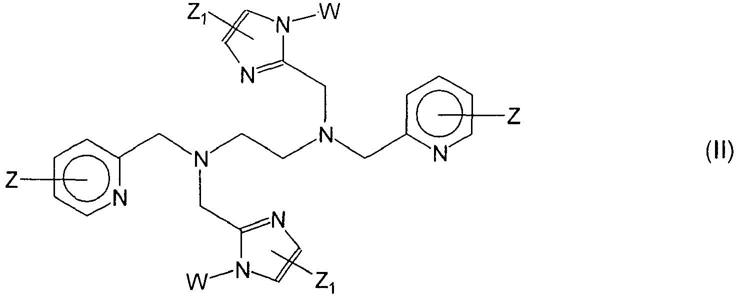
-- wobei die Reste Z und Z₁ unabhängig voneinander ausgewählt sind aus Wasserstoffatomen, Alkyl-, Alkylcarbonsäure-, Alkylsulfonsäure-, Alkylphosphonsäure-, Alkylammonium-, Thioalkyl-, Hydroxyalkyl-, Aminoalkyl-, Carbonsäure-, Phosphonsäure-, Sulfonsäure-, und/oder aus primären Amino-Gruppen, deren aliphatische Hauptketten, insofern vorhanden, aus nicht mehr als 6 Kohlenstoffatomen bestehen;
-- wobei die Reste Z zusätzlich ausgewählt sein können aus Phenyl-Gruppen, Alkenyl- und Formyl-Gruppen, deren aliphatische Hauptketten, insofern vorhanden, aus nicht mehr als 3 Kohlenstoffatomen bestehen;
-- wobei die Reste Z₁ im Imidazol-homologen Ring in 4- und/oder 5-Stellung substituiert sind;
-- wobei die Reste W unabhängig voneinander ausgewählt sind aus Wasserstoffatomen, sowie Alkyl-Gruppen und Hydroxyalkylgruppen mit nicht mehr als 6 Kohlenstoffatomen in der Hauptkette und Phenyl-Gruppen.

5. Verfahren gemäß Anspruch 4, **dadurch gekennzeichnet, dass** die Reste Z und Z₁ Wasserstoffatome sind und der Rest W eine Methyl-Gruppe darstellt.

6. Verfahren gemäß einem oder beiden der Ansprüche 4 und 5, **dadurch gekennzeichnet, dass** als Metall-Kationen Eisen(III)-Ionen vorliegen.

7. Verfahren gemäß einem oder mehreren der Ansprüche 1 bis 6, **dadurch gekennzeichnet, dass** das molare Verhältnis von Metall-Kationen zu organischem Komplex-Ligand in der Metallkomplex-Verbindung 2:1 nicht überschreitet, aber mindestens 1:2 und insbesondere 1:1 ist.

8. Verfahren gemäß einem oder mehreren der Ansprüche 1 bis 7, **dadurch gekennzeichnet, dass** die Dosierung von Wasserstoffperoxid derart erfolgt, dass der Gewichtsanteil im zu behandelnden Abwasser mindestens 0,001 g/l, bevorzugt mindestens 0,01 g/l beträgt und 100 g/l, bevorzugt 10 g/l nicht überschreitet.

9. Verfahren gemäß einem oder mehreren der Ansprüche 1 bis 8, **dadurch gekennzeichnet, dass** die Dosierung der Metallkomplex-Verbindung derart erfolgt, dass der auf das Metall bezogene Gewichtsanteil der Metallkomplex-Verbindung im zu behandelnden Abwasser mindestens 0,1 ppm, bevorzugt mindestens 1 ppm beträgt und 1000 ppm, bevorzugt 100 ppm nicht überschreitet.

10. Verfahren gemäß einem oder mehreren der Ansprüche 1 bis 9, **dadurch gekennzeichnet, dass** die Dosierung von Wasserstoffperoxid unabhängig von der Dosierung der Metallkomplex-Verbindung aus voneinander getrennten Bevorratungs- und Dosiereinheiten in das zu behandelnde Abwasser erfolgt.

11. Verfahren gemäß Anspruch 10, **dadurch gekennzeichnet, dass** Wasserstoffperoxid als wässrige Lösung mit einem Gewichtsanteil an Wasserstoffperoxid von höchstens 80 %, bevorzugt höchstens 60 % zudosiert wird.

12. Verfahren gemäß einem oder beiden der Ansprüche 10 und 11, **dadurch gekennzeichnet, dass** die Metallkomplex-Verbindung als eine wässrige Suspension oder Lösung der Metallkomplex-Verbindung mit einem Gewichtsanteil bezogen auf das Metall von nicht weniger als 0,1 %, bevorzugt nicht weniger als 1 % und besonders bevorzugt von nicht weniger als 5 % zudosiert wird.

13. Verfahren gemäß einem oder beiden der Ansprüche 10 und 11, **dadurch gekennzeichnet, dass** die Metallkomplex-Verbindung selbst als Feststoff zudosiert wird.

14. Verfahren gemäß einem oder mehreren der Ansprüche 1 bis 8, **dadurch gekennzeichnet, dass** die Metallkomplex-Verbindung in geträgerter Form eingesetzt wird, wobei das zu behandelnde Abwasser das Trägermaterial, an dessen Oberfläche die Metallkomplex-Verbindung gebunden ist, für einen vorgegebenen Zeitraum oder dauerhaft umströmt.

15. Verfahren gemäß Anspruch 14, **dadurch gekennzeichnet, dass** das zu behandelnde Abwasser das Trägermaterial, an dessen Oberfläche die Metallkomplex-Verbindung gebunden ist, solange umströmt, bis der auf das Metall bezogene Gewichtsanteil der Metallkomplex-Verbindung im zu behandelnden Abwasser mindestens 0,1 ppm, bevorzugt mindestens 1 ppm beträgt und 1000 ppm, bevorzugt 100 ppm nicht überschreitet.

## Claims

1. Method for the germicidal treatment of wastewater, wherein an amount of hydrogen peroxide and a catalyst are added to the wastewater, or the hydrogen peroxide-comprising wastewater is brought into contact with a catalyst, **characterized in that** the catalyst is a metal complex compound comprising
a) a metal cation of iron, zinc, copper, cobalt, vanadium or manganese and
b) organic complex ligands of the general formula (I): 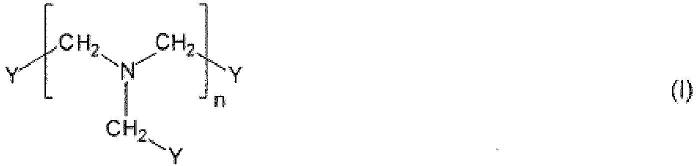
-- wherein the radicals Y independently of one another are selected from aromatic heterocycles having at least one nitrogen heteroatom;
-- wherein the number n is at least 1 and at most 5.

2. Method according to Claim 1, **characterized in that** the radicals Y of the complex ligands of the general formula (I) are selected from pyridin-2-yl, pyrazin-2-yl, pyrimidin-2-yl, pyridazin-3-yl, imidazol-2-yl, pyrazol-3-yl, purin-2-yl, purin-6-yl, purin-8-yl, quinolin-2-yl, isoquinolin-1-yl, isoquinolin-3-yl, phthalazin-1-yl, quinoxalin-2-yl, quinazolin-2-yl, cinnolin-3-yl, pteridin-2-yl, pteridin-6-yl and/or pteridin-7-yl.

3. Method according to one or both of the preceding claims, **characterized in that** the radicals Y of the complex ligands of the general formula (I) are present as nuclear-substituted heterocycles, wherein the substituents are selected from alkyl, alkylcarboxylic acid, alkylsulfonic acid, alkylphosphonic acid, alkylammonium, thioalkyl, hydroxyalkyl, aminoalkyl, carboxylic acid, phosphonic acid, sulfonic acid, and/or primary amino groups if present having an aliphatic main chain of no more than 6 carbon atoms.

4. Method according to one or more of the preceding Claims 1 to 3, **characterized in that** the complex-ligand corresponds to the following chemical structural formula (II): 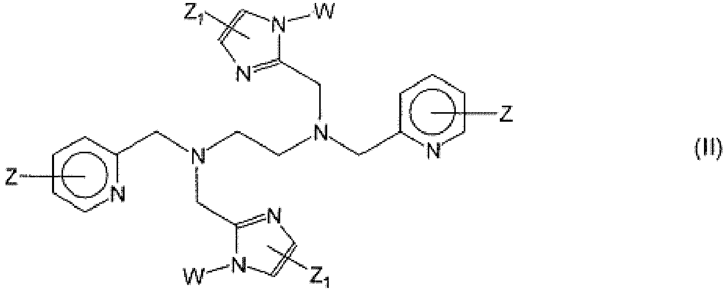
-- wherein the radicals Z and Z₁ independently of one another are selected from hydrogen atoms, alkyl, alkylcarboxylic acid, alkylsulfonic acid, alkylphosphonic acid, alkylammonium, thioalkyl, hydroxyalkyl, aminoalkyl, carboxylic acid, phosphonic acid, sulfonic acid, and/or from primary amino groups, the aliphatic main chains of which, where present, comprise no more than 6 carbon atoms;
-- wherein the radicals Z in addition can be selected from phenyl groups, alkenyl and formyl groups, the aliphatic main chains of which, where present, comprise no more than 3 carbon atoms;
-- wherein the radicals Z₁ in the imidazole-homologous ring are substituted in the 4- and/or 5-position;
-- wherein the radicals W independently of one another are selected from hydrogen atoms, and also alkyl groups and hydroxyalkyl groups having no more than 6 carbon atoms in Main chain, and phenyl groups.

5. Method according to Claim 4, **characterized in that** the radicals Z and Z₁ are hydrogen atoms, and the radical W is a methyl group.

6. Method according to one or both of Claims 4 and 5, **characterized in that**, as metal cations, iron(III) ions are present.

7. Method according to one or more of Claims 1 to 6, **characterized in that** the molar ratio of metal cations to organic complex ligand in the metal complex compound does not exceed 2:1, but is at least 1:2, and in particular 1:1.

8. Method according to one or more of Claims 1 to 7, **characterized in that** hydrogen peroxide is metered in such a manner that the weight fraction in the wastewater that is to be treated is at least 0.001 g/l, preferably at least 0.01 g/l, and does not exceed 100 g/l, preferably 10 g/l.

9. Method according to one or more of Claims 1 to 8, **characterized in that** the metal complex compound is metered in such a manner that the metal-related weight fraction of the metal complex compound in the wastewater that is to be treated is at least 0.1 ppm, preferably at least 1 ppm, and does not exceed 1000 ppm, preferably 100 ppm.

10. Method according to one or more of Claims 1 to 9, **characterized in that** the hydrogen peroxide is metered independently of the metering of the metal complex compound from storage and metering units that are separate from one another into the wastewater that is to be treated.

11. Method according to Claim 10, **characterized in that** hydrogen peroxide is added as aqueous solution having a weight fraction of hydrogen peroxide of at most 80%, preferably at most 60%.

12. Method according to one or both of Claims 10 and 11, **characterized in that** the metal complex compound is added as an aqueous suspension or solution of the metal complex compound having a weight fraction based on the metal of not less than 0.1%, preferably not less than 1%, and particularly preferably of not less than 5%.

13. Method according to one or both of Claims 10 and 11, **characterized in that** the metal complex compound is added itself as a solid.

14. Method according to one or more of Claims 1 to 8, **characterized in that** the metal complex compound is used in supported form, wherein the wastewater that is to be treated flows, for a predetermined time or permanently, around the support material, to the surface of which the metal complex compound is bound.

15. Method according to Claim 14, **characterized in that** the wastewater that is to be treated flows around the support material, to the surface of which the metal complex compound is bound, until the metal-related weight fraction of the metal complex compound in the wastewater that is to be treated is at least 0.1 ppm, preferably at least 1 ppm, and does not exceed 1000 ppm, preferably 100 ppm.

## Revendications

1. Procédé de traitement germicide d'une eau usée, une quantité de peroxyde d'hydrogène et un catalyseur étant ajoutés à l'eau usée ou l'eau usée contenant du peroxyde d'hydrogène étant mise en contact avec un catalyseur, **caractérisé en ce que** le catalyseur est un composé de complexe métallique constitué par
a) un cation métallique de fer, zinc, cuivre, cobalt, vanadium ou manganèse, et
b) un ligand complexe organique de formule générale (I) : 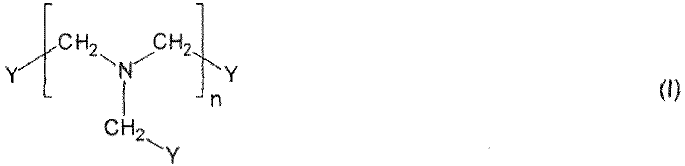
- - dans laquelle les radicaux Y sont choisis indépendamment les uns des autres parmi les hétérocycles aromatiques contenant au moins un hétéroatome d'azote ;
- - dans laquelle le nombre n vaut au moins 1 et au plus 5.

2. Procédé selon la revendication 1, **caractérisé en ce que** les radicaux Y du ligand complexe de formule générale (I) sont choisis parmi pyridin-2-yle, pyrazin-2-yle, pyrimidin-2-yle, pyridazin-3-yle, imidazol-2-yle, pyrazol-3-yle, purin-2-yle, purin-6-yle, purin-8-yle, quinolin-2-yle, isoquinolin-1-yle, isoquinolin-3-yle, phtalazin-1-yle, quinoxalin-2-yle, quinazolin-2-yle, cinnolin-3-yle, ptéridin-2-yle, ptéridin-6-yle et/ou ptéridin-7-yle.

3. Procédé selon une ou deux des revendications précédentes, **caractérisé en ce que** les radicaux Y du ligand complexe de formule générale (I) se présentent sous la forme d'hétérocycles à noyau substitué, les substituants étant choisis parmi les groupes alkyle, acide alkylcarboxylique, acide alkylsulfonique, acide alkylphosphonique, alkylammonium, thioalkyle, hydroxyalkyle, aminoalkyle, acide carboxylique, acide phosphonique, acide sulfonique et/ou amino primaire avec, lorsqu'elle est présente, une chaîne principale aliphatique d'au plus 6 atomes de carbone.

4. Procédé selon une ou plusieurs des revendications 1 à 3 précédentes, **caractérisé en ce que** le ligand complexe correspond à la formule structurale chimique (II) suivants : 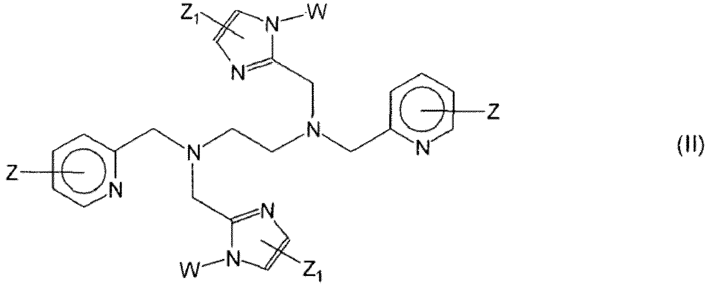
-- dans laquelle les radicaux Z et Z₁ sont choisis indépendamment les uns des autres parmi les atomes d'hydrogène, les groupes alkyle, acide alkylcarboxylique, acide alkylsulfonique, acide alkylphosphonique, alkylammonium, thioalkyle, hydroxyalkyle, aminoalkyle, acide carboxylique, acide phosphonique, acide sulfonique et/ou amino primaire, dont les chaînes principales aliphatiques, lorsqu'elles sont présentes, ne sont pas constituées de plus de 6 atomes de carbone ;
-- dans laquelle les radicaux Z peuvent en outre être choisis parmi les groupes phényle, les groupes alcényle et formyle, dont les chaînes principales aliphatiques, lorsqu'elles sont présentes, ne sont pas constituées de plus de 3 atomes de carbone ;
-- dans laquelle les radicaux Z₁ sont substitués dans le cycle homologue à un imidazole en position 4 et/ou 5 ;
-- dans laquelle les radicaux W sont choisis indépendamment les uns des autres parmi les atomes d'hydrogène, ainsi que les groupes alkyle et les groupes hydroxyalkyle ne contenant pas plus de 6 atomes de carbone dans la chaîne principale, et les groupes phényle.

5. Procédé selon la revendication 4, **caractérisé en ce que** les radicaux Z et Z₁ sont des atomes d'hydrogène et le radical W représente un groupe méthyle.

6. Procédé selon une ou deux des revendications 4 et 5, **caractérisé en ce que** des ions fer (III) sont présents en tant que cations métalliques.

7. Procédé selon une ou plusieurs des revendications 1 à 6, **caractérisé en ce que** le rapport molaire entre les cations métalliques et le ligand complexe organique dans le composé de complexe métallique ne dépasse pas 2:1, mais est d'au moins 1:2 et notamment 1:1.

8. Procédé selon une ou plusieurs des revendications 1 à 7, **caractérisé en ce que** l'ajout de peroxyde d'hydrogène a lieu de sorte que la proportion en poids dans l'eau usée à traiter soit d'au moins 0,001 g/l, de préférence d'au moins 0,01 g/l, et ne dépasse pas 100 g/l, de préférence 10 g/l.

9. Procédé selon une ou plusieurs des revendications 1 à 8, **caractérisé en ce que** l'ajout du composé de complexe métallique a lieu de sorte que la proportion en poids relative au métal du composé de complexe métallique dans l'eau usée à traiter soit d'au moins 0,1 ppm, de préférence d'au moins 1 ppm, et ne dépasse pas 1 000 ppm, de préférence 100 ppm.

10. Procédé selon une ou plusieurs des revendications 1 à 9, **caractérisé en ce que** l'ajout de peroxyde d'hydrogène a lieu indépendamment de l'ajout du composé de complexe métallique dans l'eau usée à traiter à partir d'unités de stockage et de dosage séparées l'une de l'autre.

11. Procédé selon la revendication 10, **caractérisé en ce que** le peroxyde d'hydrogène est ajouté sous la forme d'une solution aqueuse ayant une proportion en poids de peroxyde d'hydrogène d'au plus 80 %, de préférence d'au plus 60 %.

12. Procédé selon une ou deux des revendications 10 et 11, **caractérisé en ce que** le composé de complexe métallique est ajouté sous la forme d'une suspension ou solution aqueuse du composé de complexe métallique ayant une proportion en poids relative au métal non inférieure à 0,1 %, de préférence non inférieure à 1 % et de manière particulièrement préférée non inférieure à 5 %.

13. Procédé selon une ou deux des revendications 10 et 11, **caractérisé en ce que** le composé de complexe métallique est lui-même ajouté sous forme solide.

14. Procédé selon une ou plusieurs des revendications 1 à 8, **caractérisé en ce que** le composé de complexe métallique est utilisé sous forme supportée, l'eau usée à traiter passant sur le matériau support à la surface de laquelle le composé de complexe métallique est relié pendant une durée prédéterminée ou durablement.

15. Procédé selon la revendication 14, **caractérisé en ce que** l'eau usée à traiter passe sur le matériau support à la surface duquel le composé de complexe métallique est relié jusqu'à ce que la proportion en poids relative au métal du composé de complexe métallique dans l'eau usée à traiter soit d'au moins 0,1 ppm, de préférence d'au moins 1 ppm, et ne dépasse pas 1 000 ppm, de préférence 100 ppm.
